(19)

Europäisches
Patentamt
European
Patent Office
Office européen
des brevets

(11) **EP 4 333 148 A1**

(12) **EUROPEAN PATENT APPLICATION**
published in accordance with Art. 153(4) EPC

(43) Date of publication:
**06.03.2024  Bulletin 2024/10**

(21) Application number: **22938734.5**

(22) Date of filing: **19.07.2022**

(51) International Patent Classification (IPC):
***H01M 10/0525*** (2010.01)

(86) International application number:
**PCT/CN2022/106429**

(87) International publication number:
**WO 2024/016153 (25.01.2024 Gazette 2024/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde City, Fujian 352100 (CN)**

(72) Inventor: **The designation of the inventor has not
yet been filed**

(74) Representative: **Jacob, Reuben Ellis et al
Maucher Jenkins
Seventh Floor Offices
Artillery House
11-19 Artillery Row
London SW1P 1RT (GB)**

(54) **BATTERY PACK AND ELECTRIC DEVICE**

(57)   This application provides a battery pack including a battery pack box and a battery cell, where an internal space of the battery pack box includes a first region to an n-th region. Each of the regions is provided with a battery cell. A positive electrode active substance in a positive electrode of each k-th battery cell includes lithium iron phosphate and/or lithium nickel cobalt manganate having a first discharge voltage plateau and one or more types of supplementary active substances having a second discharge voltage plateau. In the first battery cell to the n-th battery cell, in any case where a sum of a discharge capacity corresponding to the first discharge voltage plateau and a discharge capacity corresponding to the second discharge voltage plateau is 100%, a discharge capacity proportion corresponding to the second discharge voltage plateau of the k-th battery cell is greater than a discharge capacity proportion corresponding to the second discharge voltage plateau of the (k-1)-th battery cell. The battery pack provided in this application has better power performance, larger discharge capacity, and higher energy retention rate under low temperature.

FIG. 3

**Description**

**TECHNICAL FIELD**

This application relates to the field of lithium-ion batteries, and in particular, to a battery pack having a high energy retention rate under low temperature and an electric apparatus including such battery pack.

**BACKGROUND**

In recent years, with the continuous development of lithium-ion battery technologies, lithium-ion batteries have been widely used in energy storage power supply systems such as hydroelectric, thermal, wind, and solar power plants, as well as many other fields including electric tools, electric bicycles, electric motorcycles, electric vehicles, military equipment, and aerospace.

In the foregoing fields, the capacity of a lithium-ion secondary battery cell sometimes cannot meet use demands. Therefore, it is necessary to connect a plurality of lithium-ion secondary battery cells in series or in parallel to form a battery pack to increase the overall discharge capacity of the battery pack.

However, when a battery pack formed by lithium-ion secondary battery cells is used in a low-temperature environment, for example, in winter, the energy retention rate is significantly reduced, that is, the endurance under low temperature is significantly reduced. Therefore, how the overall endurance of the battery pack under low temperature is improved has become a key problem to be resolved urgently.

**SUMMARY**

This application is made in view of the foregoing technical problem and is intended to provide a battery pack formed by lithium-ion secondary batteries that has an excellent energy retention rate and improved endurance under low temperature, as well as an electric apparatus including such battery pack.

To achieve the foregoing purpose, a first aspect of this application provides a battery pack including a battery pack box and a battery cell accommodated in the battery pack box. The battery pack is characterized in that

based on determined temperature distribution in an entire internal space of the battery pack box during use under low temperature, the internal space of the battery pack box includes a first region to an n-th region according to a descending order of temperature, where n is a natural number greater than or equal to 2, and optionally, n is 2, 3, 4, or 5; a first battery cell is provided in the first region; for any natural number k satisfying $2 \leq k \leq n$, a k-th battery cell is provided in a k-th region; the k-th battery cell and a (k-1)-th battery cell are arranged adjacent to each other;
the internal space of the battery pack box includes one or more first regions and/or k-th regions;
a positive electrode of each k-th battery cell includes a positive electrode active substance, the positive electrode active substance including the following substances:

lithium iron phosphate and/or lithium nickel cobalt manganate having a first discharge voltage plateau, and one or more types of supplementary active substances having a second discharge voltage plateau, a molecular formula of the supplementary active substance being $A_xM_y(PO_4)_z$, where
A is one or more selected from Li, Na, K, and Ca,
M is one or more selected from V, Ti, and Mn,
x, y, and z are each independently selected from integers from 1 to 6, and
values of x, y, and z make the whole compound electrically neutral; and
in the first battery cell to the n-th battery cell, in any case where a sum of a discharge capacity corresponding to the first discharge voltage plateau and a discharge capacity corresponding to the second discharge voltage plateau is 100%, a discharge capacity proportion corresponding to the second discharge voltage plateau of the k-th battery cell is greater than a discharge capacity proportion corresponding to the second discharge voltage plateau of the (k-1)-th battery cell.

In this application, the temperature distribution in the internal space of the battery pack can be determined using a simulation method. Subsequently, the internal space of the battery pack box is divided into n regions according to a descending order of temperature.

In an example, the temperature distribution in the internal space of the battery pack can be determined using a simulation method with ANSYS-SCDM software (Beijing Huanzhong Ruichi Technology Co., Ltd.). The method includes the following steps.

(1) Perform a low temperature ($\leq$ 10°C) operating condition test on the battery, and record the current, battery resistance, and operating condition procedure parameters in this process.

(2) Input a three-dimensional structural model of the battery pack, thermal conductivity of materials, a water cooling system structure, a water cooling flow rate, and a water cooling temperature into the ANSYS-SCDM software to calculate internal heat generation and dissipation balance of the battery pack, so as to obtain the temperature distribution at different times and different positions.

In any embodiment, based on the determined temperature distribution in the entire internal space of the battery pack box during use under low temperature, for the first region or the k-th region, a difference between a maximum temperature and a minimum temperature in a same region is greater than or equal to 3°C, optionally, less than or equal to 10°C.

Optionally, the maximum temperature in the k-th region is less than or equal to a minimum temperature in the (k-1)-th region.

When the difference between the maximum temperature and the minimum temperature in space of the battery pack box is less than 3°C, region division may not be required. It can be learned from experience that a temperature difference of less than 3°C in a same region has little influence on the discharge capacity of the battery in this region.

In any embodiment, in the entire internal space of the battery pack box, based on the determined temperature distribution in the internal space of the battery pack box during use under low temperature, a maximum temperature is $T_H$, a minimum temperature is $T_L$, and $T_H - T_L = T_M$.

When $T_M \geq 6°C$, optionally when $T_M \geq 7°C$, $n \geq 2$,

a maximum temperature in the first region is $T_H$, and a minimum temperature $T_1 = T_H - (T_M/n)$; and
when $k < n$,
a maximum temperature in the k-th region is $T_{k-1}$, a minimum temperature

$$T_k = T_H - k(T_M/n),$$

a maximum temperature in the n-th region is $T_{n-1}$, and a minimum temperature $T_n = T_L$;
where

$$3°C \leq T_M/n \leq 10°C.$$

Optionally, the inside of the battery pack box may be divided into two regions, three regions, or four regions; at most five regions; and preferably three regions.

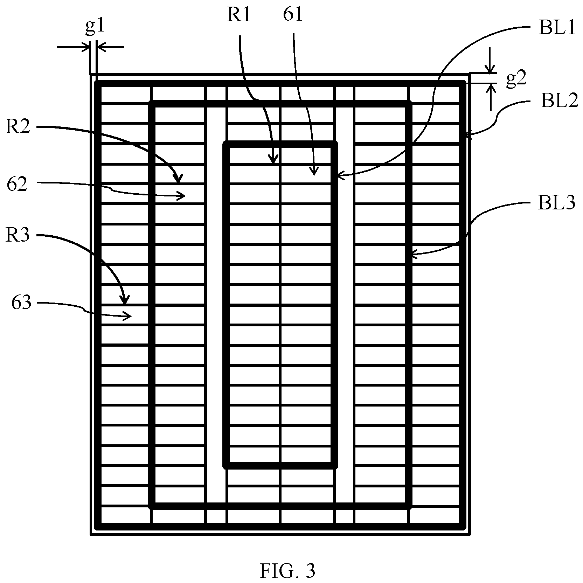

In any embodiment, the internal space of the battery pack box is divided into three regions. As shown in FIG. 3, the internal space of the battery pack box includes a first region R1, a second region R2, and a third region R3. The first region R1 is a substantially rectangular region enclosed by a first boundary line BL1 and is located at a central portion of a rectangular shape of the internal space of the battery pack box (for example, length and width of a rectangular shape of the first region R1 may respectively be substantially 1/2 of length and width of the rectangular shape of the internal space of the battery pack box). The second region R2 is a substantially annular region between the first boundary line BL1 and a third boundary line BL3. The third region R3 is a substantially annular region between the second boundary line BL2 and the third boundary line BL3. The first boundary line BL1, the second boundary line BL2, and the third boundary line BL3 are imaginary lines drawn for clearly indicating the first region R1, the second region R2, and the third region R3.

Further, a first battery cell 61 is provided in the first region R1, a second battery cell 62 is provided in the second region R2, and a third battery cell 63 is provided in the third region R3. The second battery cell 62 is arranged around the first battery cell 61, and the third battery cell 63 is arranged around the second battery cell 62. The first battery cell 61, the second battery cell 62, and the third battery cell 63 each have a first discharge voltage plateau and a second discharge voltage plateau. An average discharge voltage of the first discharge voltage plateau is higher than an average discharge voltage of the second discharge voltage plateau. Respective positive electrode active substances of the first battery cell 61, the second battery cell 62, and the third battery cell 63 each are formed by mixing lithium iron phosphate and/or lithium nickel cobalt manganate having a first discharge voltage plateau, and a supplementary active substance having a second discharge voltage plateau. In the first battery cell 61, the second battery cell 62, and the third battery cell 63, in any case where a sum of a discharge capacity corresponding to the first discharge voltage plateau and a discharge capacity corresponding to the second discharge voltage plateau is 100%, a discharge capacity proportion corresponding to the second discharge voltage plateau of the third battery cell 63 > a discharge capacity proportion corresponding to the second discharge voltage plateau of the second battery cell 62 > a discharge capacity proportion corresponding to the second discharge voltage plateau of the first battery cell 61. When placed in an external environment at a same temperature, after a battery has run for a specified time, in a battery pack 1, the third region R3 has a lower temperature than the second region R2, and the second region R2 has a lower temperature than the first region R1.

Battery cells with different low-temperature energy retention rates and having double discharge voltage plateaus (a first discharge voltage plateau having a higher discharge voltage and a second discharge voltage plateau having a lower discharge voltage) are respectively provided in different regions of the battery pack box. In addition, a battery cell with a higher low-temperature energy retention rate is provided in a region at a lower temperature. Specifically, region division in FIG. 3 is used as an example (unless otherwise specified, the following uses the region division in FIG. 3 as an example). Based on conventional temperature distribution in a battery pack, temperature of the first region R1 > temperature of the second region R2 > temperature of the third region R3. In this application, the discharge capacity proportion corresponding to the second discharge voltage plateau of the third battery cell 63 > the discharge capacity proportion corresponding to the second discharge voltage plateau of the second battery cell 62 > the discharge capacity proportion corresponding to the second discharge voltage plateau of the first battery cell 61. As such, under low temperature, the third battery cell 63 has finished discharging first using the first discharge voltage plateau and starts to perform supplementary discharging using the second discharge voltage plateau. At the moment, the first battery cell and the second battery cell are still being discharged using the first discharge voltage plateau. In this way, the three battery cells are discharged simultaneously to ensure that the overall energy retention rate of the battery pack in the low-temperature environment is kept at a high level. When the second battery cell has been discharged using the first discharge voltage plateau and starts to perform supplementary discharging using the second discharge voltage plateau, the third battery cell is still being discharged using the second discharge voltage plateau, and the first battery cell is being discharged using the first discharge voltage plateau. In this way, the three battery cells are still discharged simultaneously to ensure that the overall energy retention rate of the battery pack in the low-temperature environment is kept at a high level. Therefore, the discharge capacity proportions corresponding to the second discharge voltage plateaus of the first battery cell, the second battery cell, and the third battery cell can be further adjusted to obtain a battery pack with a higher overall low-temperature energy retention rate. In addition, such configuration significantly increases the low-temperature energy retention rate of the battery pack under low temperature in winter.

The above principle is also applicable to low-temperature energy retention of the battery pack including a k-th battery cell.

In this application, the supplementary active substance of which the molecular formula is $A_xM_y(PO_4)_z$ can serve as a plateau attenuation buffer agent and can slow down decrease of a discharge voltage when a terminal voltage of a cell during discharging attenuates sharply, thereby prolonging the discharging process and improving the discharging power performance.

In any embodiment, a positive electrode active substance of the first battery cell 61 has a gram capacity of 140-198 mAh/g, a positive electrode active substance of the second battery cell has a gram capacity of 137-192 mAh/g, and a positive electrode active substance of the third battery cell has a gram capacity of 134-186 mAh/g.

In this way, the respective gram capacities of the first battery cell 61, the second battery cell 62, and the third battery cell 63 being within the foregoing ranges allows for substantially same discharge capacities of the first battery cell 61, the second battery cell 62, and the third battery cell 63 under low temperature, thereby increasing the overall energy retention rate of the battery pack 1 under low temperature.

In any embodiment, the supplementary active substance is one or more selected from $Li_3V_2(PO_4)_3$, $Na_3V_2(PO_4)_3$, $K_3V_2(PO_4)_3$, $Li_3V(PO_4)_2$, $Na_3V(PO_4)_2$, $K_3V(PO_4)_2$, $LiMnPO_4$, $NaMnPO_4$, $KMnPO_4$, $Li_2VMn_2(PO_4)_3$, $Na_2VMn_2(PO_4)_3$, $K_2VMn_2(PO_4)_3$, $LiVMn(PO_4)_2$, $NaVMn(PO_4)_2$, $KVMn(PO_4)_2$, $CaV_4(PO_4)_6$, $LiTi_2(PO_4)_3$, $NaTi_2(PO_4)_3$, $KTi_2(PO_4)_3$, $CaTi_4(PO_4)_6$, $Li_2VTi(PO_4)_3$, $Na_2VTi(PO_4)_3$, $K_2VTi(PO_4)_3$, $CaVTi(PO_4)_3$, $Li_3MnTi(PO_4)_3$, $Na_3MnTi(PO_4)_3$, and $K_3MnTi(PO_4)_3$.

In any embodiment, in the positive electrode of each k-th battery cell, a mass percentage of the supplementary active substance is 3% to 15% based on a total mass of the positive electrode active substance.

If the mass percentage of the supplementary active substance is less than 3%, the discharge voltage plateau thereof cannot be shown in a discharge curve, that is, cannot achieve a power increasing effect. If the mass percentage of the supplementary active substance is greater than 15%, the energy retention rate thereof under low temperature is still increased. However, a large percentage thereof not only deteriorates the discharge capacity under room temperature but also results in failure of a more significant increase in overall discharge capacity under low temperature.

In any embodiment, the positive electrode of each first battery cell includes no supplementary active substance, or

the positive electrode of each first battery cell includes the supplementary active substance, optionally, a second voltage plateau of the supplementary active substance in the first battery cell is greater than or equal to an overall discharge cut-off voltage of the first battery cell.

In this application, the positive electrode of the first battery cell in the first region may include no supplementary active substance, may partially include the supplementary active substance, or may entirely include the supplementary active substance.

When the first battery cell partially or entirely includes the supplementary active substance, it is advantageous to make the voltage plateau of the supplementary active substance be greater than or equal to the overall discharge cut-off voltage of the first battery cell, because this allows the supplementary active substance to effectively act as a plateau attenuation buffer agent before cutoff of discharging.

In any embodiment, when the respective positive electrodes of the first battery cell to the n-th battery cell include a same positive electrode active substance,

a percentage of the supplementary active substance in the positive electrode of the (k-1)-th battery cell is less than or equal to a percentage of the supplementary active substance in the positive electrode of the k-th battery cell.

A larger mass percentage of the supplementary active substance for generating the second discharge voltage plateau with a lower discharge voltage indicates a larger discharge capacity proportion corresponding to the second discharge voltage plateau. Therefore, adding a larger percentage of supplementary active substance into the k-th battery cell than the (k-1)-th battery cell in the k-th region at a lower temperature helps to increase the overall low-temperature energy retention rate of the battery pack.

In any embodiment, the positive electrode of each first battery cell includes no supplementary active substance or includes a same type of supplementary active substance as the second battery cell and the third battery cell.

In any embodiment, in the positive electrode of each first battery cell, a mass percentage of the supplementary active substance is 0% to 3% based on a total mass of the active substance of the positive electrode;

in the positive electrode of each second battery cell, a mass percentage of the supplementary active substance is 3% to 7% based on a total mass of the active substance of the positive electrode; and
in the positive electrode of each third battery cell, a mass percentage of the supplementary active substance is 7% to 15% based on a total mass of the active substance of the positive electrode.

In this application, the mass percentages of the supplementary active substances in the first battery cell, the second battery cell, and the third battery cell being within the foregoing ranges can better balance discharge periods of the first battery cell, the second battery cell, and the third battery cell to make the discharge periods be the same as far as possible and can further improve the overall low-temperature energy retention rate and power performance of the battery pack.

In any embodiment, under a temperature below 10°C, 1.6 V $\leq$ discharge cut-off voltage of the k-th battery cell $\leq$ discharge cut-off voltage of the (k-1)-th battery cell $\leq$ 2.1 V

An outer ring (the k-th region) of the battery pack is at a low temperature, and an inner ring (the (k-1)-th region, with respect to the k-th region of the outer ring) is at a high temperature, resulting in a short discharge cut-off time and a smaller discharge capacity as well as power performance degradation of the cell in the outer ring. A lower cut-off voltage of the outer ring can allow for release of more energy, compensating for discharge variation of the cell caused by temperature rise in the battery pack, thereby increasing the overall discharge capacity of the battery pack.

In any embodiment, an overall discharge cut-off voltage V1 of the first battery cell is 2.0-2.1 V, an overall discharge cut-off voltage V2 of the second battery cell is 1.7-2.0 V, an overall discharge cut-off voltage V3 of the third battery cell is 1.6-1.9 V, and V1 > V2 > V3.

In this way, the discharge cut-off voltages of the first battery cell 61, the second battery cell 62, and the third battery cell 63 being set as described above allows the first battery cell 61, the second battery cell 62, and the third battery cell 63 to release substantially same energy under low temperature, thereby increasing the overall energy retention rate of the battery pack under low temperature.

In any embodiment, a discharge capacity of a single cell of each k-th battery cell is less than a discharge capacity of a single cell of each (k-1)-th battery cell.

In this way, making the discharge capacities of the respective single cells of the first battery cell 61, the second battery cell 62, and the third battery cell 63 satisfy the above relationship, especially making the discharge capacities of the first battery cell 61, the second battery cell 62, and the third battery cell 63 measured at room temperature, for example, at a temperature of 25°C satisfy the above relationship can further increase the overall energy retention rate of the battery pack under low temperature.

A second aspect of this application provides a method for arranging battery pack. The battery pack includes a battery pack box and a battery cell accommodated in the battery pack box. The method includes the following steps.

Step (1): Determine temperature distribution in an entire internal space of the battery pack box during use under low temperature by using a simulation method.

Step (2): Based on the temperature distribution determined in step (1), divide the internal space of the battery pack box into n regions according to a descending order of temperature, where n is a natural number greater than or equal to 2, and optionally, n is 2, 3, 4, or 5.

Step (3): Provide a first battery cell in the first region; for any natural number k satisfying $2 \leq k \leq n$, provide a k-th battery cell in a k-th region, with the k-th battery cell and a (k-1)-th battery cell adjacent to each other.

The internal space of the battery pack box includes one or more first regions and/or k-th regions.

A positive electrode of each k-th battery cell includes a positive electrode active substance. The positive electrode active substance includes the following substances:

lithium iron phosphate and/or lithium nickel cobalt manganate having a first discharge voltage plateau, and
one or more types of supplementary active substances having a second discharge voltage plateau, a molecular formula of the supplementary active substance being $A_xM_y(PO_4)_z$, where
A is one or more selected from Li, Na, K, and Ca,
M is one or more selected from V, Ti, and Mn,
x, y, and z are each independently selected from integers from 1 to 6, and
values of x, y, and z make the whole compound electrically neutral; and
in the first battery cell to the n-th battery cell, in any case where a sum of a discharge capacity corresponding to the first discharge voltage plateau and a discharge capacity corresponding to the second discharge voltage plateau is 100%, a discharge capacity proportion corresponding to the second discharge voltage plateau of the k-th battery cell is greater than a discharge capacity proportion corresponding to the second discharge voltage plateau of the (k-1)-th battery cell.

A third aspect of this application provides an electric apparatus. The electric apparatus includes the battery pack according to the first aspect of this application. The battery pack may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

**BRIEF DESCRIPTION OF DRAWINGS**

FIG. 1 is a schematic structural diagram of a battery pack according to an embodiment of this application.
FIG. 2 is a top view of a structural assembly of the battery pack with a box removed according to the embodiment of this application shown in FIG. 1 under a condition that an internal space of the battery pack box is divided into two regions.
FIG. 3 is a top view of a structural assembly of the battery pack with a box removed according to the embodiment of this application shown in FIG. 1 under a condition that an internal space of the battery pack box is divided into three regions.
FIG. 4 and FIG. 5 are schematic diagrams of a constant-current discharge curve of a battery cell having double discharge voltage plateaus and used in a battery pack according to an embodiment of this application, where FIG. 4 shows a case in which a positive electrode active substance of the battery cell includes lithium nickel cobalt manganate (NCM) and $NaTi_2(PO_4)_3$, and FIG. 5 shows a case in which the positive electrode active substance of the battery cell includes lithium iron phosphate (LFP) and $NaTi_2(PO_4)_3$.

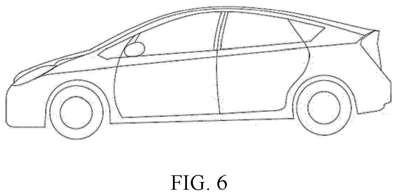

FIG. 6 is a schematic diagram of an electric apparatus using a battery pack according to an embodiment of this application as a power source.

Description of reference signs
1. Battery pack; 2. upper box body; 3. lower box body; g1, g2. gap; BL1. first boundary line; BL2. second boundary line; BL3. third boundary line; R1. first region; R2. second region; R3. third region; 61. first battery cell; 62. second battery cell; and 63. third battery cell.

**DESCRIPTION OF EMBODIMENTS**

The following specifically discloses embodiments of a battery pack and an electric apparatus in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-6. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer of 2, 3, 4, 5, 6, 7, 8, 9, 10, 11, or 12. The value ranges "a-b" and "a to b" are used with the same meanings.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B" : A is true (or present) and B is false (or not present); A is false (or not present) and B is true (or present); or both A and B are true (or present).

The inventors have noted that when a battery pack formed by lithium-ion secondary battery cells is used in a low-temperature environment in winter, the battery cells at different positions in the battery pack are different in dissipation capability and heat insulation effect, so the battery cells at different positions have different charge/discharge performance. Specifically, during use in a low-temperature environment, the inner battery cell in the battery pack has a relatively higher temperature and therefore has relatively better discharge performance under low temperature, and the outer battery cell in the battery pack has a relatively lower temperature and therefore has relatively lower discharge performance under low temperature. The battery cells at different positions in the battery pack are different in discharge capability under low temperature, resulting in significant decrease in the overall energy retention rate of the battery pack under low temperature.

In view of the above problem, the inventors have found through repeated research that the battery cells provided in a region at a relatively low temperature each have two discharge voltage plateaus, and after discharging in the discharge voltage plateau having a higher voltage ends, the battery cells continue to be discharged using the discharge voltage plateau having a lower voltage, increasing the discharge capacities of these battery cells, so that these battery cells have better discharge performance under low temperature.

Therefore, a first aspect of this application provides a battery pack including a battery pack box and a battery cell accommodated in the battery pack box. The battery pack is characterized in that

based on determined temperature distribution in an entire internal space of the battery pack box during use under low temperature, the internal space of the battery pack box includes a first region to an n-th region according to a descending order of temperature, where n is a natural number greater than or equal to 2, and optionally, n is 2, 3, 4, or 5; a first battery cell is provided in the first region; for any natural number k satisfying $2 \le k \le n$, a k-th battery cell is provided in a k-th region; the k-th battery cell and a (k-1)-th battery cell are arranged adjacent to each other; the internal space of the battery pack box includes one or more first regions and/or k-th regions; a positive electrode of each k-th battery cell includes a positive electrode active substance, the positive electrode active substance including the following substances:

lithium iron phosphate and/or lithium nickel cobalt manganate having a first discharge voltage plateau, and one or more types of supplementary active substances having a second discharge voltage plateau, a molecular formula of the supplementary active substance being $A_xM_y(PO_4)_z$, where

A is one or more selected from Li, Na, K, and Ca,

M is one or more selected from V, Ti, and Mn,

x, y, and z are each independently selected from integers from 1 to 6, and

values of x, y, and z make the whole compound electrically neutral; and

in the first battery cell to the n-th battery cell, in any case where a sum of a discharge capacity corresponding to the first discharge voltage plateau and a discharge capacity corresponding to the second discharge voltage plateau is 100%, a discharge capacity proportion corresponding to the second discharge voltage plateau of the k-th battery cell is greater than a discharge capacity proportion corresponding to the second discharge voltage plateau of the (k-1)-th battery cell.

In this application, the temperature distribution in the internal space of the battery pack can be determined using a simulation method. Subsequently, the internal space of the battery pack box is divided into n regions according to a descending order of temperature.

In an example, the temperature distribution in the internal space of the battery pack can be determined using a simulation method with ANSYS-SCDM software. The method includes the following steps.

(1) Perform a low temperature ($\leq$ 10°C) operating condition test on the battery, and record the current, battery resistance, and operating condition procedure parameters in this process.

(2) Input a three-dimensional structural model of the battery pack, thermal conductivity of materials, a water cooling system structure, a water cooling flow rate, and a water cooling temperature into the ANSYS-SCDM software to calculate internal heat generation and dissipation balance of the battery pack, so as to obtain the temperature distribution at different times and different positions.

It should be noted that for this application, the method for determining the temperature distribution in the internal space of the battery pack is not limited to the simulation method. The concept of this application is aimed at addressing the issue of discharge variation of the battery cells at different positions and overall discharge capacity reduction due to temperature distribution variation in the battery pack in actual use under low temperature. Therefore, all methods capable of determining the temperature distribution inside the battery pack in actual application scenarios are within the concept scope of this application.

It can be understood that the internal space of the battery pack box in this application may include one or more, optionally, only one first region and/or k-th region.

In some embodiments, based on the determined temperature distribution in the entire internal space of the battery pack box during use under low temperature, for the first region or the k-th region, a difference between a maximum temperature and a minimum temperature in a same region is greater than or equal to 3°C, optionally, less than or equal to 10°C.

Optionally, the maximum temperature in the k-th region is less than or equal to a minimum temperature in the (k-1)-th region.

When the difference between the maximum temperature and the minimum temperature in space of the battery pack box is less than 3°C, region division may not be required. It can be learned from experience that a temperature difference of less than 3°C in a same region has little influence on the discharge capacity of the battery in this region.

However, it should be understood that in this application, the difference between the maximum temperature and the minimum temperature in a same region is limited to be greater than or equal to 3°C, optionally less than or equal to 10°C; however, this solution is merely a preferable option, and the difference between the maximum temperature and the minimum temperature in a same region being less than 3°C or greater than 10°C is also within the concept scope of this application.

In some embodiments, in the entire internal space of the battery pack box, based on the determined temperature distribution in the internal space of the battery pack box during use under low temperature, a maximum temperature is $T_H$, a minimum temperature is $T_L$, and $T_H$-$T_L$=$T_M$.

When $T_M \geq 6$°C, optionally when $T_M \geq 7$°C, n $\geq$ 2,

a maximum temperature in the first region is $T_H$, and a minimum temperature $T_1$=$T_H$-($T_M$/n); and

when k < n,

a maximum temperature in the k-th region is $T_{k-1}$, a minimum temperature

$$T_k = T_H - k(T_M/n),$$

a maximum temperature in the n-th region is $T_{n-1}$, and a minimum temperature $T_n$=$T_L$;

where

$$3°C \leq T_M/n \leq 10°C.$$

As such, internal regions in the space of the battery pack box can be divided better, and such division manner allows the battery pack to better adapt to a low-temperature environment.

Optionally, $T_M/n$ represents a range, that is, a range of $(T_M/n-3°C)$ to $(T_M/n+3°C)$.

In this application, "low temperature" refers to a temperature less than or equal to 10°C.

Optionally, the inside of the battery pack box may be divided into two regions, three regions, or four regions; at most five regions; and preferably three regions.

The following uses a case in which the internal space of the battery pack box is in a substantially rectangular shape as an example to specify the battery pack according to the first aspect of this application. However, the battery pack in this application is not limited to the case in which the internal space of the battery pack box is in a substantially rectangular shape.

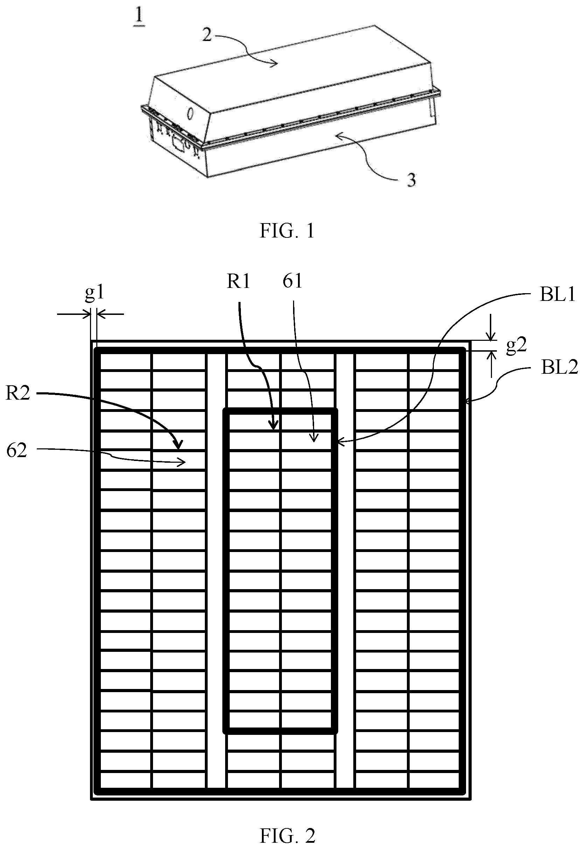

FIG. 1 is a schematic structural diagram of a battery pack 1 according to an embodiment of this application. FIG. 2 is a top view of a structural assembly of the battery pack 1 with a box removed in FIG. 1 under a condition that an internal space of the battery pack box is divided into two regions. FIG. 3 is a top view of a structural assembly of the battery pack with a box removed according to the embodiment of this application shown in FIG. 1 under a condition that an internal space of the battery pack box is divided into three regions.

As shown in FIG. 1, FIG. 2 and FIG. 3, the battery pack 1 in this application includes a battery box and a plurality of battery cells (61, 62, and 63) disposed in the battery box. The battery box includes an upper box body 2 and a lower box body 3. The upper box body 2 can cover the lower box body 3 to form an enclosed space (a battery pack cavity) for accommodating the plurality of battery cells.

Under a condition that the internal space of the battery pack box is divided into two regions, as shown in FIG. 2, the internal space of the battery pack box includes a first region R1 and a second region R2. The first region R1 is a substantially rectangular region enclosed by a first boundary line BL1 and is located at a central portion of a rectangular shape of the internal space of the battery pack box (for example, length and width of a rectangular shape of the first region R1 may respectively be substantially 1/2 of length and width of the rectangular shape of the internal space of the battery pack box). The second region R2 is a substantially annular region between the first boundary line BL1 and a second boundary line BL2, where the first boundary line BL1 and the second boundary line BL2 are imaginary lines drawn for clearly indicating the first region R1 and the second region R2.

Further, a first battery cell 61 is provided in the first region R1, a second battery cell 62 is provided in the second region R2, and the second battery cell 62 and the first battery cell 61 are arranged adjacent to each other. In this application, A and B being arranged "adjacent to each other" can be understood as that A surrounds B, B surrounds A, or A and B are arranged adjacent to each other in a single direction. In addition, A and B being arranged "adjacent to each other" also includes a case in which a spacing member (for example, a spacer plate) is present between A and B or no spacing member (for example, a spacer plate) is present between A and B.

The first battery cell 61 and the second battery cell 62 each have a first discharge voltage plateau and a second discharge voltage plateau. An average discharge voltage of the first discharge voltage plateau is higher than an average discharge voltage of the second discharge voltage plateau. Respective positive electrode active substances of the first battery cell 61 and the second battery cell 62 each are formed by mixing lithium iron phosphate and/or lithium nickel cobalt manganate having a first discharge voltage plateau, and a supplementary active substance having a second discharge voltage plateau. In the first battery cell 61 and the second battery cell 62, in any case where a sum of a discharge capacity corresponding to the first discharge voltage plateau and a discharge capacity corresponding to the second discharge voltage plateau is 100%, a discharge capacity proportion corresponding to the second discharge voltage plateau of the second battery cell 62 is greater than a discharge capacity proportion corresponding to the second discharge voltage plateau of the first battery cell 61. When placed in an external environment at a same temperature, in the battery pack 1, the second region R2 has a lower temperature than the first region R1.

The "discharge capacity proportion corresponding to the second discharge voltage plateau" of each battery cell refers to a proportion of the discharge capacity corresponding to the second discharge voltage plateau of each battery cell, calculated based on a total discharge capacity corresponding to the first discharge voltage plateau and the second discharge voltage plateau of each battery cell, where the discharge capacity corresponding to the first discharge voltage plateau and the discharge capacity corresponding to the second discharge voltage plateau of each of the first battery cell 61 and the second battery cell 62 are respectively measured under a same charge/discharge condition at a temperature below 10°C (for example, -7°C) before the first battery cell 61 and the second battery cell 62 are assembled into the battery pack.

In addition, under a condition that the internal space of the battery pack box is divided into three regions, as shown in FIG. 3, the internal space of the battery pack box includes a first region R1, a second region R2, and a third region R3. The first region R1 is a substantially rectangular region enclosed by a first boundary line BL1 and is located at a central portion of a rectangular shape of the internal space of the battery pack box (for example, length and width of a rectangular shape of the first region R1 may respectively be substantially 1/2 of length and width of the rectangular shape of the internal space of the battery pack box). The second region R2 is a substantially annular region between the first boundary line BL1 and a third boundary line BL3. The third region R3 is a substantially annular region between the second boundary line BL2 and the third boundary line BL3. The first boundary line BL1, the second boundary line BL2, and the third boundary line BL3 are imaginary lines drawn for clearly indicating the first region R1, the second region R2, and the third region R3.

Further, a first battery cell 61 is provided in the first region R1, a second battery cell 62 is provided in the second region R2, and a third battery cell 63 is provided in the third region R3. The second battery cell 62 is arranged around the first battery cell 61, and the third battery cell 63 is arranged around the second battery cell 62. The first battery cell 61, the second battery cell 62, and the third battery cell 63 each have a first discharge voltage plateau and a second discharge voltage plateau. An average discharge voltage of the first discharge voltage plateau is higher than an average discharge voltage of the second discharge voltage plateau. Respective positive electrode active substances of the first battery cell 61, the second battery cell 62, and the third battery cell 63 each are formed by mixing lithium iron phosphate and/or lithium nickel cobalt manganate having a first discharge voltage plateau, and a supplementary active substance having a second discharge voltage plateau. In the first battery cell 61, the second battery cell 62, and the third battery cell 63, in any case where a sum of a discharge capacity corresponding to the first discharge voltage plateau and a discharge capacity corresponding to the second discharge voltage plateau is 100%, a discharge capacity proportion corresponding to the second discharge voltage plateau of the third battery cell 63 > a discharge capacity proportion corresponding to the second discharge voltage plateau of the second battery cell 62 > a discharge capacity proportion corresponding to the second discharge voltage plateau of the first battery cell 61. When placed in an external environment at a same temperature, after a battery has run for a specified time, in the battery pack 1, the third region R3 has a lower temperature than the second region R2, and the second region R2 has a lower temperature than the first region R1.

The "discharge capacity proportion corresponding to the second discharge voltage plateau" of each battery cell refers to a proportion of the discharge capacity corresponding to the second discharge voltage plateau of each battery cell, calculated based on a total discharge capacity corresponding to the first discharge voltage plateau and the second discharge voltage plateau of each battery cell, where the discharge capacity corresponding to the first discharge voltage plateau and the discharge capacity corresponding to the second discharge voltage plateau of each of the first battery cell 61, the second battery cell 62, and the third battery cell 63 are respectively measured under a same charge/discharge condition at a temperature below 10°C (for example, - 7°C) before the first battery cell 61, the second battery cell 62, and the third battery cell 63 are assembled into the battery pack.

It should be particularly noted that throughout the specification of this application, the first battery cell is described as having a first discharge voltage plateau and a second discharge voltage plateau, or the positive electrode active substance of the first battery cell is described as being formed by mixing lithium iron phosphate and/or lithium nickel cobalt manganate having a first discharge voltage plateau, and a supplementary active substance having a second discharge voltage plateau; however, the first battery cell having only the first discharge voltage plateau but no second discharge voltage plateau, that is, the first battery cell formed by only the lithium iron phosphate and/or lithium nickel cobalt manganate is also included in the scope of this application.

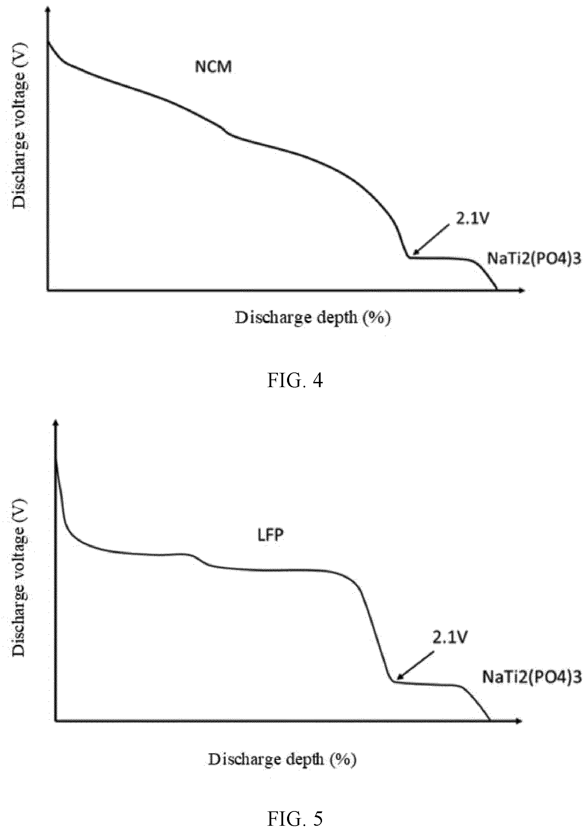

It should be noted that the "discharge voltage plateau" refers to a portion in which the discharge voltage is relatively stable in a discharge curve. FIG. 4 and FIG. 5 are schematic diagrams of a constant-current discharge curve of a battery cell having double discharge voltage plateaus and used in a battery pack according to an embodiment of this application at a temperature below 10°C (for example, -7°C), where FIG. 4 shows a case in which a positive electrode active substance of the battery cell includes lithium nickel cobalt manganate (NCM) and a supplementary active substance $NaTi_2(PO_4)_3$, and FIG. 5 shows a case in which the positive electrode active substance of the battery cell includes lithium iron phosphate (LFP) and a supplementary active substance $NaTi_2(PO_4)_3$. In addition, as shown in FIG. 4 and FIG. 5, under a condition that the discharge curve of the battery cell has double discharge voltage plateaus, the discharge voltage decreases sharply after a point of 2.1 V. However, addition of the supplementary active substance $NaTi_2(PO_4)_3$ allows for a gentle decrease trend, and discharging continues using the discharge voltage plateau.

Battery cells with different low-temperature energy retention rates and having double discharge voltage plateaus (a first discharge voltage plateau having a higher discharge voltage and a second discharge voltage plateau having a lower discharge voltage) are respectively provided in different regions of the battery pack box. In addition, a battery cell with a higher low-temperature energy retention rate is provided in a region at a lower temperature. Specifically, region division in FIG. 3 is used as an example (unless otherwise specified, the following uses the region division in FIG. 3 as an example). Based on conventional temperature distribution in a battery pack, temperature of the first region R1 > temperature of the second region R2 > temperature of the third region R3. In this application, the discharge capacity proportion corresponding to the second discharge voltage plateau of the third battery cell 63 > the discharge capacity proportion corresponding to the second discharge voltage plateau of the second battery cell 62 > the discharge capacity proportion corresponding to the second discharge voltage plateau of the first battery cell 61. As such, under low temperature, the third battery cell 63 has finished discharging first using the first discharge voltage plateau and starts to perform supplementary discharging using the second discharge voltage plateau. At the moment, the first battery cell and the second battery cell are still being discharged using the first discharge voltage plateau. In this way, the three battery cells are discharged simultaneously to ensure that the overall energy retention rate of the battery pack in the low-temperature environment is kept at a high level. When the second battery cell has been discharged using the first discharge voltage plateau and starts to perform supplementary discharging using the second discharge voltage plateau, the third battery cell is still being discharged using the second discharge voltage plateau, and the first battery cell is being discharged using the first discharge voltage plateau. In this way, the three battery cells are still discharged simultaneously to ensure that the overall energy retention rate of the battery pack in the low-temperature environment is kept at a high level. Therefore, the discharge capacity proportions corresponding to the second discharge voltage plateaus of the first battery cell, the second battery cell, and the third battery cell can be further adjusted to obtain a battery pack with a higher overall low-temperature energy retention rate. In addition, such configuration significantly increases the low-temperature energy retention rate of the battery pack under low temperature in winter.

The above principle is also applicable to low-temperature energy retention of the battery pack including a k-th battery cell.

It should be noted that specific definition and test method of the discharge capacity proportion corresponding to the second discharge voltage plateau of the first/second/third battery cell refer to the "Related Test" part in the specification.

The discharge capacity of the second discharge voltage plateau having a lower discharge voltage in the battery cell can be adjusted by changing the percentages and types of the supplementary active substances and the proportions of various types of the supplementary active substances.

As shown in FIG. 2 and FIG. 3, in the plurality of battery cells, the outer ones may be in contact with an inner surface of the battery pack box (an upper box body 2, and a lower box body 3) or may be in contact with a structural member disposed on the inner surface of the battery pack box. In the top views shown in FIG. 2 and FIG. 3, gaps g1 and g2 are optionally formed between an outermost battery cell and the inner surface of the battery pack box. Various structural members of the battery pack can be disposed in these gaps g1 and g2. In clearances between different battery cells, a capacitor and the like can be optionally disposed to increase overall energy density of the battery pack.

A pure lithium iron phosphate/pure lithium nickel cobalt manganate system has good low-temperature discharge performance. Therefore, a battery pack including a pure lithium iron phosphate/pure lithium nickel cobalt manganate system is quite suitable for being used under low temperature.

In this application, the supplementary active substance of which the molecular formula is $A_xM_y(PO_4)_z$ can serve as a plateau attenuation buffer agent and can slow down decrease of a discharge voltage when a terminal voltage of a cell during discharging attenuates sharply, thereby prolonging the discharging process and improving the discharging power performance.

In some optional embodiments, a positive electrode active substance of the first battery cell 61 has a gram capacity of 140-198 mAh/g, a positive electrode active substance of the second battery cell has a gram capacity of 137-192 mAh/g, and a positive electrode active substance of the third battery cell has a gram capacity of 134-186 mAh/g.

In this way, the respective gram capacities of the first battery cell 61, the second battery cell 62, and the third battery cell 63 being within the foregoing ranges allows for substantially same discharge capacities of the first battery cell 61, the second battery cell 62, and the third battery cell 63 under low temperature, thereby increasing the overall energy retention rate of the battery pack 1 under low temperature.

The gram capacity of the positive electrode active substance of each battery cell refers to an average gram capacity of the positive electrode active substance. For example, the gram capacity can be calculated according to respective gram capacities and mass proportions of lithium iron phosphate and/or lithium nickel cobalt manganate and the supplementary active substance included in the positive electrode active substance.

In some optional embodiments, a theoretical gram capacity of the supplementary active substance is 40-110 mAh/g.

In this way, use of the supplementary active substance of which the theoretical gram capacity is within the foregoing range can ensure each battery cell to have sufficient energy density and can increase the overall low-temperature discharge power of each battery cell and the battery pack.

In some embodiments, the supplementary active substance is one or more selected from $Li_3V_2(PO_4)_3$, $Na_3V_2(PO_4)_3$, $K_3V_2(PO_4)_3$, $Li_3V(PO_4)_2$, $Na_3V(PO_4)_2$, $K_3V(PO_4)_2$, $LiMnPO_4$, $NaMnPO_4$, $KMnPO_4$, $Li_2VMn_2(PO_4)_3$, $Na_2VMn_2(PO_4)_3$, $K_2VMn_2(PO_4)_3$, $LiVMn(PO_4)_2$, $NaVMn(PO_4)_2$, $KVMn(PO_4)_2$, $CaV_4(PO_4)_6$, $LiTi_2(PO_4)_3$, $NaTi_2(PO_4)_3$, $KTi_2(PO_4)_3$, $CaTi_4(PO_4)_6$, $Li_2VTi(PO_4)_3$, $Na_2VTi(PO_4)_3$, $K_2VTi(PO_4)_3$, $CaVTi(PO_4)_3$, $Li_3MnTi(PO_4)_3$, $Na_3MnTi(PO_4)_3$, and $K_3MnTi(PO_4)_3$.

In some optional embodiments, in the supplementary active substance of which the molecular formula is

$A_xM_y(PO_4)_z$, when M is Ti, the element Ti has many variable valences; therefore, the supplementary active substance has an reversible charge/discharge plateau within a voltage region of 2.0-2.6 V; and thus, after a small amount of NTP is mixed, a battery including the supplementary active substance generates a small plateau at 2.0-2.6 V in the end of discharging, slowing down decrease of the voltage and helping to alleviate significant decrease trend of the voltage in a low-charge state, thereby improving the power performance and improving the cold start performance of the system under low temperature.

Similarly, in some optional embodiments, in the supplementary active substance of which the molecular formula is $A_xM_y(PO_4)_z$, when M is V, the discharge voltage plateau is at 1.5-2.1 V

In some other optional embodiments, in the supplementary active substance of which the molecular formula is AxMy(PO4)z, when M is Mn, the discharge voltage plateau is at 2.3-3.0 V.

M may be a plurality of variable-valence metal elements, and therefore may have a plurality of plateaus.

In some embodiments, in the positive electrode of each k-th battery cell, a mass percentage of the supplementary active substance is 3% to 15% based on a total mass of the positive electrode active substance.

The mass percentage of the supplementary active substance may be 3%, 4%, 5%, 6%, 7%, 8%, 9%, 10%, 11%, 12%, 13%, 14%, or 15%, optionally 3%, 4%, 5%, 6%, 7%, 8%, 9%, or 10%, based on the total mass of the positive electrode active substance.

If the mass percentage of the supplementary active substance is less than 3%, the discharge voltage plateau thereof cannot be shown in a discharge curve, that is, cannot achieve a power increasing effect. If the mass percentage of the supplementary active substance is greater than 15%, the energy retention rate thereof under low temperature is still increased. However, a large percentage thereof not only deteriorates the discharge capacity under room temperature but also results in failure of a more significant increase in overall discharge capacity under low temperature.

In some embodiments, the positive electrode of each first battery cell includes no supplementary active substance, or

the positive electrode of each first battery cell includes the supplementary active substance, optionally, a second voltage plateau of the supplementary active substance in the first battery cell is greater than or equal to an overall discharge cut-off voltage of the first battery cell.

In this application, the positive electrode of the first battery cell in the first region may include no supplementary active substance, may partially include the supplementary active substance, or may entirely include the supplementary active substance.

When the first battery cell partially or entirely includes the supplementary active substance, it is advantageous to make the voltage plateau of the supplementary active substance be greater than or equal to the overall discharge cut-off voltage of the first battery cell, because this allows the supplementary active substance to effectively act as a plateau attenuation buffer agent before cutoff of discharging.

In some embodiments, when the respective positive electrodes of the first battery cell to the n-th battery cell include a same positive electrode active substance,

a percentage of the supplementary active substance in the positive electrode of the (k-1)-th battery cell is less than or equal to a percentage of the supplementary active substance in the positive electrode of the k-th battery cell.

A larger mass percentage of the supplementary active substance for generating the second discharge voltage plateau with a lower discharge voltage indicates a larger discharge capacity proportion corresponding to the second discharge voltage plateau. Therefore, adding a larger percentage of supplementary active substance into the k-th battery cell than the (k-1)-th battery cell in the k-th region at a lower temperature helps to increase the overall low-temperature energy retention rate of the battery pack.

For example, when the respective positive electrodes of the first battery cell, the second battery cell, and the third battery cell use a same type of positive electrode active substance, a configuration that a mass percentage of the supplementary active substance of the third battery cell 63 in the third region R3 > a mass percentage of the supplementary active substance of the second battery cell 62 in the second region R2 > a mass percentage of the supplementary active substance of the first battery cell 61 in the first region R1 can increase the overall discharge energy and energy retention rate of the battery pack 1 under low temperature.

In some embodiments, the positive electrode of each first battery cell includes no supplementary active substance or includes a same type of supplementary active substance as the second battery cell and the third battery cell.

In actual operation, when the first battery cell (if it uses a supplementary active substance), the second battery cell, and the third battery cell use a same type of supplementary active substance, the manufacturing costs can be reduced, facilitating actual application.

In some embodiments, in the positive electrode of each first battery cell, a mass percentage of the supplementary active substance is 0% to 3% based on a total mass of the active substance of the positive electrode;

in the positive electrode of each second battery cell, a mass percentage of the supplementary active substance is 3% to 7% based on a total mass of the active substance of the positive electrode; and

in the positive electrode of each third battery cell, a mass percentage of the supplementary active substance is 7% to 15% based on a total mass of the active substance of the positive electrode.

Optionally, in the positive electrode of each first battery cell, the mass percentage of the supplementary active substance is 0%, 0.5%, 1.0%, 1.5%, 2.0%, 2.5%, or 3.0% based on the total mass of the active substance.

Optionally, in the positive electrode of each first battery cell, the mass percentage of the supplementary active substance is 3%, 3.5%, 4.0%, 4.5%, 5.0%, 5.5%, 6.0%, 6.5%, or 7.0% based on the total mass of the active substance.

Optionally, in the positive electrode of each first battery cell, the mass percentage of the supplementary active substance is 7.0%, 7.5%, 8.0%, 8.5%, 9.0%, 9.5%, 10.0%, 11.0%, 12.0%, 13.0%, 14.0%, or 15.0% based on the total mass of the active substance.

In this application, the mass percentages of the supplementary active substances in the first battery cell, the second battery cell, and the third battery cell being within the foregoing ranges can better balance discharge periods of the first battery cell, the second battery cell, and the third battery cell to make the discharge periods be the same as far as possible and can further improve the overall low-temperature energy retention rate and power performance of the battery pack.

In some embodiments, under a temperature below 10°C, 1.6 V ≤ discharge cut-off voltage of the k-th battery cell ≤ discharge cut-off voltage of the (k-1)-th battery cell ≤ 2.1 V.

An outer ring (the k-th region) of the battery pack is at a low temperature, and an inner ring (the (k-1)-th region, with respect to the k-th region of the outer ring) is at a high temperature, resulting in a short discharge period and a smaller discharge capacity as well as power performance degradation of the cell in the outer ring. A lower cut-off voltage of the outer ring can allow for release of more energy, compensating for discharge variation of the cell caused by temperature rise in the battery pack, thereby increasing the overall discharge capacity of the battery pack.

In some embodiments, an overall discharge cut-off voltage V1 of the first battery cell is 2.0-2.1 V, an overall discharge cut-off voltage V2 of the second battery cell is 1.7-2.0 V, an overall discharge cut-off voltage V3 of the third battery cell is 1.6-1.9 V, and V1 > V2 > V3.

In this way, the discharge cut-off voltages of the first battery cell 61, the second battery cell 62, and the third battery cell 63 being set as described above allows the first battery cell 61, the second battery cell 62, and the third battery cell 63 to release substantially same energy under low temperature, thereby increasing the overall energy retention rate of the battery pack under low temperature.

An excessively high charge cut-off voltage or an excessively low discharge cut-off voltage reduces the cycling performance of the battery cell. Under a condition that the charge cut-off voltage is excessively high, the battery cell is over-charged, and under a condition that the battery cell is fully charged, further charging leads to structural changes of a positive electrode material, causing capacity loss; and in addition, oxygen released by decomposition of the positive electrode material has a sharp chemical reaction with an electrolyte, which is possible to cause explosion as a worst result. Under a condition that the discharge cut-off voltage is excessively low, the battery cell is over-discharged, over-discharging causes an increase in internal pressure of the battery cell, and reversibility of positive and negative electrode active substances is reduced, even charging can only recover the reversibility partially, and the capacity attenuates significantly. Deep charge or deep discharge of the battery cell increases loss of the battery cell. The ideal operating state of the battery cell is shallow charge or shallow discharge, which can prolong the service life of the battery cell.

In a battery pack including three regions, an overall discharge cut-off voltage of the first battery cell may be designed according to requirements of a conventional pure lithium iron phosphate or pure lithium nickel cobalt manganate system. To be specific, for a lithium iron phosphate system, the cut-off voltage may be set to be 2.0 V; for a lithium nickel cobalt manganate system, the cut-off voltage may be set to be 2.1 V; an overall discharge cut-off voltage of the second battery cell may be less than a conventional cut-off voltage, preferably a discharge process of the battery surpasses a voltage plateau region of the supplementary active substance, and in this case, reduction of the cut-off voltage and work of an additive platform can both ensure improvement of the power performance and reduce discharge capacity variation of the cell in the inner ring caused by temperature rise; an overall discharge cut-off voltage of the third battery cell is less than the overall discharge cut-off voltage of the second battery cell and greater than 1.6 V, this can ensure full play of the function of the discharge voltage plateau of the supplementary active substance under large power, thereby effectively alleviating voltage attenuation; however, the discharge cut-off voltage cannot be excessively low, and if it is less than 1.6 V, motor power of a vehicle system is limited.

In some optional embodiments, in the first, second, and third battery cells 61, 62, and 63, a difference between a minimum discharge voltage of the first discharge voltage plateau and a maximum discharge voltage of the second discharge voltage plateau is greater than 0.2 V, optionally greater than 0.4 V.

For a battery cell having two discharge voltage plateaus, a larger difference between discharge voltages of the first discharge voltage plateau and the second discharge voltage plateau and a larger discharge capacity of a second discharge voltage of the supplementary active substance indicate a more significant improvement effect provided by the second discharge voltage plateau. If the difference between the minimum discharge voltage of the first discharge voltage plateau and the maximum discharge voltage of the second discharge voltage plateau is less than 0.2 V, the difference between the discharge voltages of the first discharge voltage plateau and the second discharge voltage plateau is smaller, which cannot significantly achieve the foregoing effect provided by the second discharge voltage plateau.

Therefore, optionally, M is Ti or Mn.

The difference between the minimum discharge voltage of the first discharge voltage plateau and the maximum discharge voltage of the second discharge voltage plateau being within the foregoing range, after discharging is performed using the first discharge voltage plateau having a higher discharge voltage, discharging can continue to be performed using the second discharge voltage plateau having a lower discharge voltage, significantly increasing energy that can be released by each battery cell under low temperature, thereby increasing the overall energy retention rate of the battery pack under low temperature.

In some embodiments, a discharge capacity of a single cell of each k-th battery cell is less than a discharge capacity of a single cell of each (k-1)-th battery cell. Optionally, the discharge capacity of the battery cell is a discharge capacity measured at a temperature below 10°C.

In this application, respective constituent units of the first battery cell, the second battery cell, and the third battery cell are referred to as "single cell".

In some optional embodiments, a discharge capacity of the single cell of the third battery cell 63 < a discharge capacity of the single cell of the second battery cell 62 < a discharge capacity of the single cell of the first battery cell 61. To be specific, optionally, the "discharge capacity of the single cell of the first battery cell 61", the "discharge capacity of the single cell of the second battery cell 62", and the "discharge capacity of the single cell of the third battery cell 63" refer to discharge capacities obtained by respectively measuring the single cell of the first battery cell 61, the single cell of the second battery cell 62, and the single cell of the third battery cell 63 under a same charge/discharge condition at 25°C before the first battery cell 61, the second battery cell 62, and the third battery cell 63 are assembled into a battery pack.

In this way, making the discharge capacities of the respective single cells of the first battery cell 61, the second battery cell 62, and the third battery cell 63 satisfy the above relationship, especially making the discharge capacities of the first battery cell 61, the second battery cell 62, and the third battery cell 63 measured at a temperature below 10°C satisfy the above relationship can further increase the overall energy retention rate of the battery pack under low temperature.

In some optional embodiments of this application, under a condition that a supplementary active substance containing no lithium is used, respective negative electrodes of the first battery cell 61, the second battery cell 62, and the third battery cell 63 can be supplemented with lithium. In this way, the respective negative electrodes of the first battery cell 61, the second battery cell 62, and the third battery cell 63 being supplemented with lithium can compensate for deficiency of lithium ions caused by adding the supplementary active substance into the positive electrode active substance, such that a total amount of effective lithium ions of the battery cell are not reduced, thereby ensuring the energy density of the battery cell.

Various well-known methods can be used for supplementing lithium for the negative electrodes. For example, the following methods can be used: a lithium supplementing apparatus is used to supplement lithium for a coated cold-pressed negative electrode plate; a lithium strip conveying structure in the apparatus is configured to convey a lithium strip; a matrix conveying structure is configured to convey the negative electrode plate; the lithium strip and the negative electrode plate are rolled; and after rolled, the lithium strip is attached to a surface of the negative electrode plate, implementing lithium supplement for the negative electrode. The lithium supplement for the negative electrode can improve initial coulombic efficiency of the battery.

In this application, the number of the first battery cell and the number of the k-th battery cell are not limited and are determined based on factors such as temperature distribution determined according to application scenarios, a simulation method and the like as well as a battery pack process.

A second aspect of this application provides a method for arranging battery pack. The battery pack includes a battery pack box and a battery cell accommodated in the battery pack box. The method includes the following steps.

Step (1): Determine temperature distribution in an entire internal space of the battery pack box during use under low temperature by using a simulation method.

Step (2): Based on the temperature distribution determined in step (1), divide the internal space of the battery pack box into n regions according to a descending order of temperature, where n is a natural number greater than or equal to 2, and optionally, n is 2, 3, 4, or 5.

Step (3): Provide a first battery cell in the first region; for any natural number k satisfying 2 ≤ k ≤ n, provide a k-th battery cell in a k-th region, with the k-th battery cell and a (k-1)-th battery cell adjacent to each other.

The internal space of the battery pack box includes one or more first regions and/or k-th regions.

A positive electrode of each k-th battery cell includes a positive electrode active substance. The positive electrode active substance includes the following substances:

lithium iron phosphate and/or lithium nickel cobalt manganate having a first discharge voltage plateau, and one or more types of supplementary active substances having a second discharge voltage plateau, a molecular formula of the supplementary active substance being $A_xM_y(PO_4)_z$, where

A is one or more selected from Li, Na, K, and Ca,

M is one or more selected from V, Ti, and Mn,

x, y, and z are each independently selected from integers from 1 to 6, and

values of x, y, and z make the whole compound electrically neutral; and

in the first battery cell to the n-th battery cell, in any case where a sum of a discharge capacity corresponding to the first discharge voltage plateau and a discharge capacity corresponding to the second discharge voltage plateau is 100%, a discharge capacity proportion corresponding to the second discharge voltage plateau of the k-th battery cell is greater than a discharge capacity proportion corresponding to the second discharge voltage plateau of the (k-1)-th battery cell.

Electric apparatus

A third aspect of this application provides an electric apparatus. The electric apparatus includes the battery pack according to the first aspect of this application. The battery pack may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

For the electric apparatus, a battery cell or a battery pack may be selected according to requirements for using the electric apparatus.

FIG. 5 shows an electric apparatus as an example. This electric apparatus is a battery electric vehicle, a hybrid electric vehicle, a plug-in hybrid electric vehicle, or the like. In order to meet the requirements of the electric apparatus on endurance under low temperature, the battery pack of this application may be used.

**Examples**

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

[Example 1]

I. Preparation of battery cell

1. Preparation of first battery cell

(1) Preparation of positive electrode plate

A positive electrode active substance lithium iron phosphate, conductive carbon, and a binder polyvinylidene fluoride (PVDF) were dispersed in a solvent N-methylpyrrolidone (NMP) and mixed to uniformity, with a mass ratio of the lithium iron phosphate, the conductive carbon and the binder polyvinylidene fluoride being 97.2:0.8:2.0, to obtain a positive electrode slurry. The positive electrode slurry obtained was evenly applied onto a positive electrode collector aluminum foil, followed by drying, cold pressing, slitting, and cutting to obtain a positive electrode plate.

(2) Preparation of negative electrode plate

A negative electrode active material graphite, a conductive agent superconducting carbon black SP, a binder SBR, and a thickener CMC-Na were dispersed in deionized water as a solvent at a mass ratio of 96:1:1:2 and mixed to uniformity to obtain a negative electrode slurry. The negative electrode slurry was evenly applied onto a negative electrode current collector copper foil, followed by drying, cold pressing, slitting, and cutting to obtain a negative electrode plate.

(3) Separator

A polyethylene film was used as a separator.

(4) Preparation of electrolyte

Ethylene carbonate (EC), dimethyl carbonate (DMC), and diethyl carbonate (DEC) were mixed to uniformity at a volume ratio of 1:1:1 to obtain an organic solvent, and then a fully dried lithium salt $LiPF_6$ was dissolved in the mixed organic solvent to prepare an electrolyte with a concentration of 1 mol/L.

(5) Preparation of battery cell

The positive electrode plate, the separator, and the negative electrode plate were sequentially stacked so that the separator was located between the positive electrode plate and the negative electrode plate for separation. Then, the resulting stack was wound to obtain a jelly roll. The jelly roll was placed into an outer package shell and dried. Subsequently, the electrolyte was injected, and processes such as vacuum packaging, standing, formation, and shaping were performed to obtain a first battery cell I-1.

2. Preparation of second battery cell

This was the same operation as the preparation of the first battery cell except that active substances used in step (1) included 95% of lithium iron phosphate and 5% of $Li_3V_2(PO_4)_3$, although the total mass of active substance was not changed.

3. Preparation of third battery cell

This was the same operation as the preparation of the first battery cell except that active substances used in step (1) included 91.5% of lithium iron phosphate and 8.5% of $Li_3V_2(PO_4)_3$, although the total mass of active substance was not changed.

II. Assembly of battery pack

The internal space of the battery pack box was divided into three regions using a simulation method with ANSYS-SCDM software (Beijing Huanzhong Ruichi Technology Co., Ltd.). Specific operations were as follows.

(1) A low temperature operating condition test was performed on the battery, and in this process, the current, battery resistance, and operating condition procedure parameters were recorded.
(2) A three-dimensional structural model of the battery pack, thermal conductivity of materials, a water cooling system structure, a water cooling flow rate, and a water cooling temperature were input into the ANSYS-SCDM software to calculate internal heat generation and dissipation balance of the battery pack, so as to obtain temperature distribution at different times and different positions.

Based on the determination using the foregoing method, when the external temperature was set to be -7°C, the first region had a maximum temperature of 18°C and a minimum temperature of 11°C, the second region had a maximum temperature of 11°C and a minimum temperature of 4°C, and the third region had a maximum temperature of 4°C and a minimum temperature of-3°C.
Referring to FIG. 3, a first battery cell I-1 was provided in the first region R1 as a first battery cell 61, a second battery cell II-1 was provided in the second region R2 as a second battery cell 62, and a third battery cell III-1 was provided in the third region R3 as a third battery cell 63. A battery pack was thus assembled. In the pack, a ratio of the numbers of the first battery cells 61, second battery cells 62 and third battery cells 63 was 12:32:40.
An overall cut-off voltage of the first battery cells was designed to be 2 V, an overall cut-off voltage of the second battery cells was designed to be 1.95 V, and an overall cut-off voltage of the third battery cells was designed to be 1.7 V.

[Examples 2-13] and [Comparative examples 1-2]

Battery packs were assembled using the same operations as in Example 1, except for the design of types of active substances of the first battery cell, the second battery cell, and the third battery cell, mass percentages of supplementary active substances in the total active substances, and/or cut-off voltages. Details are provided in the following Table 1.

In Table 1, in the column of active substances, the mass percentages of the supplementary active substances were calculated based on a total mass of the active substances (mass of lithium iron phosphate/mass of lithium nickel cobalt manganate + mass of the supplementary active substances).

It should be noted that although the embodiments of this application have included an embodiment in which the internal space of the battery pack box is divided into a first region and a second region and an embodiment in which the internal space of the battery pack box is divided into a first region, a second region, and a third region, the battery pack of this application is not limited to only the cases in which the internal space of the battery pack box is divided into two regions and three regions, but may also applicable to cases in which one or more regions are further provided on an outer side of the third region in addition to the first region, the second region, and the third region, provided that the battery cells provided in the region on the outer side are arranged around the battery cells in the region on the inner side of the third region.

In the case that the internal space of the battery pack box includes more than three regions as described above, the discharge capacity proportion corresponding to the second discharge voltage plateau of the battery cell is higher in a region that is closer to the outer side.

In addition, in a case that the internal space of the battery pack box is in a rectangular shape, four corners of the rectangular shape may serve as an outermost region, and in this region, the discharge capacity proportion corresponding to the second discharge voltage plateau of the battery cell is the highest.

[Performance test]

1. Discharge capacity of single cell and discharge capacity proportion corresponding to second discharge voltage plateau

For the first battery cell, the second battery cell, and the third battery cell in each battery pack prepared in the examples and comparative examples, their respective discharge capacities at 25°C and -7°C as well as discharge capacities corresponding to the first discharge voltage plateau and the second discharge voltage plateau at -7°C were measured using a Newway traction battery test machine (Model BTS-5V300A-4CH), and based on those, the discharge capacity proportions corresponding to the second discharge voltage plateaus of the first battery cell, the second battery cell, and the third battery cell were calculated.

The discharge capacity of the battery cell was measured using a method as follows:

(1) the battery cell was left for standing at 25°C for 2 h, ensuring the battery cell had a temperature of 25°C;
(2) at 25°C, the battery cell was charged to the charge cut-off voltage given in the following Table 1 at 0.33C and subsequently continued to be constant-voltage charged at this charge cut-off voltage until the current was 0.05C, and then charging was stopped (where C represents a rated capacity of the battery cell);
(3) the battery cell was left for standing at 25°C for 1 h;
(4) at 25°C, the battery cell was discharged to a discharge cut-off voltage given in the following Table 1 at 0.33C, and a total discharge capacity C0 discharged by the battery cell was recorded;
(5) the battery cell was left for standing at 25°C for 2 h, ensuring the battery cell had a temperature of 25°C;
(6) at 25°C, the battery cell was charged to the charge cut-off voltage given in the following Table 1 at 0.33C and subsequently continued to be constant-voltage charged at this charge cut-off voltage until a current was 0.05C, and then charging was stopped (where C represents the rated capacity of the battery cell);
(7) the battery cell was left for standing at -7°C for 2 h;
(8) at -7°C, the battery cell was discharged to the discharge cut-off voltage given in the following Table 1 at 0.33C, and a discharge capacity C1 discharged by the battery cell was recorded; and
(9) a discharge curve corresponding to step (8) was obtained, for example, a discharge curve shown in FIG. 4 of this application, where, in the discharge curve in FIG. 4, a total discharge capacity before 2.1 V equals a discharge capacity C2 corresponding to the first discharge voltage plateau, and a discharge capacity from the point of 2.1 V to the discharge cut-off voltage is a discharge capacity C3 corresponding to the second discharge voltage plateau.

Therefore, at -7°C, a discharge capacity proportion corresponding to the second discharge voltage plateau of the battery cell is C3/C1.

The discharge capacity of a single cell in the following Table 1 is the total discharge capacity C0 discharged by the battery cell as measured at 25°C in step (4).

2. Power performance of battery pack

The maximum power under-7°C corresponding to 30s 20% SOC was tested as follows:

(1) the battery was left standing in an environment of 25°C until the temperature of the battery was constant at 25°C;

(2) the battery was charged to a charge cut-off voltage at a current of 1/3C;

(3) the battery was left standing for 10 min;

(4) the battery was charged to the charge cut-off voltage at a current of 0.05C;

(5) the battery was left standing for 10 min;

(6) the battery was discharged to 0.8Cn at a current of 1/3C, adjusting the battery to 20% SOC state of charge;

(7) the battery was left standing in an environment of -7°C until the temperature of the battery was constant at -7°C;

(8) the battery was discharged for 30s at a specific power to a discharge cut-off voltage, and a discharge capacity in this step was recorded as Cn;

(9) the battery was left standing for 5 min; and

(10) if the voltage in step (8) had reached the discharge cut-off voltage, the corresponding power was recorded as a maximum power; and if the voltage had not reached the discharge cut-off voltage or had reached the discharge cut-off voltage less than 30s ago, the battery was charged at a current of 0.05C to a capacity equal to the discharge capacity C1, which readjusted the battery to 20% SOC, discharging in step (8) was repeated after the power was appropriately increased/reduced until the battery was discharged to the discharge cut-off voltage at the end of the 30s, and the power at that point was recorded as the maximum power.

3. Discharge energy of battery pack (at -7°C) and total energy retention rate of battery pack at -7°C

For each of the battery packs in the examples and comparative examples, total full discharge energy of the battery pack at 25°C and total full discharge energy of the battery pack at -7°C were measured using the Newway traction battery test machine (Model BTS-5V300A-4CH), and a total energy retention rate (%) of the battery pack at -7°C was calculated by dividing the total full discharge energy of the battery pack at - 7°C by the total full discharge energy of the battery pack at 25°C.

The measurement of the total full discharge energy of the battery pack at 25°C was performed in accordance with "7.1.2 Capacity and Energy Test at Room Temperature" in GBT 31467.2-2015 Technical Specification for Battery Packs and Systems for High Energy Applications.

The measurement of the total full discharge energy of the battery pack at - 7°C was performed in accordance with "7.1.4 Capacity and Energy Test at Low Temperature" in GBT 31467.2-2015 Technical Specification for Battery Packs and Systems for High Energy Applications. The total full discharge energy of the battery pack at -7°C is the discharge energy of the battery pack at -7°C in the following Table 1.

Test results are shown in the following tables.

**Table 1**

| Example | Battery cell | Active substance | Cut-off voltage (V) | Discharge capacity proportion corresponding to second discharge voltage plateau (-7°C) | Discharge capacity of single cell at 25°C (Ah) | Power performance of battery pack under -7°C corresponding to 30s 20% SOC (kW) | Discharge energy of battery pack at -7°C (kWh) | Total energy retention rate of battery pack at -7°C |
|---|---|---|---|---|---|---|---|---|
| Example 1 | First battery cell | Lithium iron phosphate | 2 | 0.0% | 192.5 | 121.2 | 62.2 | 89.70% |
| | Second battery cell | Lithium iron phosphate + 5% $Li_3V_2(PO_4)_3$ | 1.95 | 2.3% | 187.3 | | | |
| | Third battery cell | Lithium iron phosphate + 8.5% $Li_3V_2(PO_4)_3$ | 1.7 | 4.7% | 183.3 | | | |
| Example 2 | First battery cell | Lithium iron phosphate + 2% $Li_3V_2(PO_4)_3$ | 2 | 1.4% | 190.2 | 121.2 | 61.6 | 89.70% |
| | Second battery cell | Lithium iron phosphate + 5% $Li_3V_2(PO_4)_3$ | 1.95 | 2.3% | 187.3 | | | |
| | Third battery cell | Lithium iron phosphate + 8.5% $Li_3V_2(PO_4)_3$ | 1.7 | 4.7% | 183.3 | | | |
| Example 3 | First battery cell | Lithium iron phosphate | 2 | 0.0% | 192.5 | 118.5 | 61.3 | 88.90% |
| | Second battery cell | Lithium iron phosphate + 5% $Li_3V_2(PO_4)_3$ | 1.95 | 2.3% | 187.3 | | | |
| | Third battery cell | Lithium iron phosphate + 12% $Li_3V_2(PO_4)_3$ | 1.7 | 6.0% | 179.81 | | | |

(continued)

| Example | Battery cell | Active substance | Cut-off voltage (V) | Discharge capacity proportion corresponding to second discharge voltage plateau (-7°C) | Discharge capacity of single cell at 25°C (Ah) | Power performance of battery pack under -7°C corresponding to 30s 20% SOC (kW) | Discharge energy of battery pack at -7°C (kWh) | Total energy retention rate of battery pack at -7°C |
|---|---|---|---|---|---|---|---|---|
| Example 4 | First battery cell | Lithium iron phosphate | 2 | 0.0% | 192.5 | 122.4 | 62.9 | 90.30% |
| | Second battery cell | Lithium iron phosphate + 5% $Na_3V_2(PO_4)_3$ | 1.95 | 3.0% | 188.8 | | | |
| | Third battery cell | Lithium iron phosphate + 8.5% $Na_3V_2(PO_4)_3$ | 1.7 | 5.9% | 186.1 | | | |
| Example 5 | First battery cell | Lithium iron phosphate | 2 | 0.0% | 192.5 | 123.6 | 63.1 | 91.10% |
| | Second battery cell | Lithium iron phosphate + 5% $LiTi_2(PO_4)_3$ | 1.95 | 3.8% | 186.2 | | | |
| | Third battery cell | Lithium iron phosphate + 8.5% $LiTi_2(PO_4)_3$ | 1.7 | 7.1% | 181.5 | | | |
| Example 6 | First battery cell | Lithium iron phosphate | 2 | 0.0% | 192.5 | 124.3 | 63.2 | 90.70% |
| | Second battery cell | Lithium iron phosphate + 5% $LiMnPO_4$ | 1.95 | 4.7% | 189.3 | | | |
| | Third battery cell | Lithium iron phosphate + 8.5% $LiMnPO_4$ | 1.7 | 7.8% | 186.8 | | | |

| Example | Battery cell | Active substance | Cut-off voltage (V) | Discharge capacity proportion corresponding to second discharge voltage plateau (-7°C) | Discharge capacity of single cell at 25°C (Ah) | Power performance of battery pack under -7°C corresponding to 30s 20% SOC (kW) | Discharge energy of battery pack at -7°C (kWh) | Total energy retention rate of battery pack at -7°C |
|---|---|---|---|---|---|---|---|---|
| Example 7 | First battery cell | Lithium iron phosphate | 2 | 0.0% | 192.5 | 123.3 | 62.7 | 90.50% |
| | Second battery cell | Lithium iron phosphate + 5% $Na_3MnTi(PO_4)_3$ | 1.95 | 6.3% | 186.6 | | | |
| | Third battery cell | Lithium iron phosphate + 8.5% $Na_3MnTi(PO_4)_3$ | 1.7 | 8.7% | 182.6 | | | |
| Example 8 | First battery cell | Lithium iron phosphate | 2.1 | 0.0% | 192.5 | 119.6 | 60.1 | 86.30% |
| | Second battery cell | Lithium iron phosphate + 3% $Li_3V_2(PO_4)_3$ | 2 | 1.3% | 189.5 | | | |
| | Third battery cell | Lithium iron phosphate + 7% $Li_3V_2(PO_4)_3$ | 1.9 | 3.9% | 185 | | | |
| Example 9 | First battery cell | Lithium iron phosphate | 2.1 | 0.0% | 192.5 | 119.8 | 60.2 | 87.30% |
| | Second battery cell | Lithium iron phosphate + 7% $Li_3V_2(PO_4)_3$ | 2 | 3.9% | 185 | | | |
| | Third battery cell | Lithium iron phosphate + 10% $Li_3V_2(PO_4)_3$ | 1.9 | 5.1% | 182.1 | | | |

EP 4 333 148 A1

21

(continued)

| Example | Battery cell | Active substance | Cut-off voltage (V) | Discharge capacity proportion corresponding to second discharge voltage plateau (-7°C) | Discharge capacity of single cell at 25°C (Ah) | Power performance of battery pack under -7°C corresponding to 30s 20% SOC (kW) | Discharge energy of battery pack at -7°C (kWh) | Total energy retention rate of battery pack at -7°C |
|---|---|---|---|---|---|---|---|---|
| Example 10 | First battery cell | Lithium iron phosphate | 2.1 | 0.0% | 192.5 | 119.6 | 60.3 | 86.90% |
| | Second battery cell | Lithium iron phosphate + 3% $Li_3V_2(PO_4)_3$ | 2 | 1.3% | 189.5 | | | |
| | Third battery cell | Lithium iron phosphate + 10% $Li_3V_2(PO_4)_3$ | 1.9 | 5.1% | 182.1 | | | |
| Example 11 | First battery cell | Lithium nickel cobalt manganate | 2.1 | 0.0% | 237.1 | 153.4 | 91.6 | 92.30% |
| | Second battery cell | Lithium nickel cobalt manganate + 5% $Li_3V_2(PO_4)_3$ | 2 | 1.8% | 230.5 | | | |
| | Third battery cell | Lithium nickel cobalt manganate + 8.5% $Li_3V_2(PO_4)_3$ | 1.9 | 3.9% | 225.5 | | | |

(continued)

| Example | Battery cell | Active substance | Cut-off voltage (V) | Discharge capacity proportion corresponding to second discharge voltage plateau (-7°C) | Discharge capacity of single cell at 25°C (Ah) | Power performance of battery pack under -7°C corresponding to 30s 20% SOC (kW) | Discharge energy of battery pack at -7°C (kWh) | Total energy retention rate of battery pack at -7°C |
|---|---|---|---|---|---|---|---|---|
| Example 12 | First battery cell | Lithium nickel cobalt manganate | 2.1 | 0.0% | 237.1 | 154.4 | 91.9 | 92.50% |
| | Second battery cell | Lithium nickel cobalt manganate + 5% $CaV_4(PO_4)_6$ | 2 | 1.9% | 230.5 | | | |
| | Third battery cell | Lithium nickel cobalt manganate + 8.5% $CaV_4(PO_4)_6$ | 1.9 | 4.1% | 226.9 | | | |
| Example 13 | First battery cell | Lithium nickel cobalt manganate | 2 | 0.0% | 237.1 | 149.9 | 78.5 | 79.10% |
| | Second battery cell | Lithium nickel cobalt manganate + 5% $Li_3V_2(PO_4)_3$ | 2.1 | 1.8% | 230.5 | | | |
| | Third battery cell | Lithium nickel cobalt manganate + 8.5% $Li_3V_2(PO_4)_3$ | 2.1 | 3.9% | 225.5 | | | |

| Example | Battery cell | Active substance | Cut-off voltage (V) | Discharge capacity proportion corresponding to second discharge voltage plateau (-7°C) | Discharge capacity of single cell at 25°C (Ah) | Power performance of battery pack under -7°C corresponding to 30s 20% SOC (kW) | Discharge energy of battery pack at -7°C (kWh) | Total energy retention rate of battery pack at -7°C |
|---|---|---|---|---|---|---|---|---|
| Comparative Example 1 | First battery cell | Lithium iron phosphate | 2 | 0.0% | 192.5 | 107.4 | 56.0 | 79.3% |
| | Second battery cell | Lithium iron phosphate | 2 | 0.0% | 192.5 | | | |
| | Third battery cell | Lithium iron phosphate | 2 | 0.0% | 192.5 | | | |
| Comparative example 2 | First battery cell | Lithium nickel cobalt manganate | 2.1 | 0.0% | 237.1 | 135.9 | 83.1 | 82.20% |
| | Second battery cell | Lithium nickel cobalt manganate | 2.1 | 0.0% | 237.1 | | | |
| | Third battery cell | Lithium nickel cobalt manganate | 2.1 | 0.0% | 237.1 | | | |

It can be learned from the results of the foregoing table that in examples 1-12, the first battery cell, the second battery cell, and the third battery cell each have a first discharge voltage plateau and a second discharge voltage plateau; in addition, the discharge capacity proportion corresponding to the second discharge voltage plateau of the third battery cell > the discharge capacity proportion corresponding to the second discharge voltage plateau of the second battery cell > the discharge capacity proportion corresponding to the second discharge voltage plateau of the first battery cell; the discharge capacity of the single cell of the first battery cell > the discharge capacity of the single cell of the second battery cell > the discharge capacity of the single cell of the third battery cell; the battery pack has good results in power and discharge energy at -7°C; and the total energy retention rate of the battery pack at -7°C is up to 86.3%-92.5%.

However, in comparative example 1 and comparative example 2, the first battery cell, the second battery cell, and the third battery cell each have one discharge voltage plateau, and the total energy retention rate of the battery pack at -7°C is only 79.3% and 82.2%. Compared with comparative example 1 or comparative example 2 with the same series of battery cell, examples 1-12 each achieve higher discharge energy, higher battery pack power and higher total energy retention rate.

In example 13, the overall cut-off voltage designed for the third battery cell and the overall cut-off voltage designed for the second battery cell are greater than the overall cut-off voltage of the first battery cell, resulting in relatively large power of the battery pack but relatively low total energy retention rate and relatively low discharge energy of the battery pack at -7°C.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Claims**

1. A battery pack, comprising a battery pack box and a battery cell accommodated in the battery pack box, wherein the battery pack is **characterized in that**

   based on determined temperature distribution in an entire internal space of the battery pack box during use under low temperature, the internal space of the battery pack box comprises a first region to an n-th region according to a descending order of temperature, wherein n is a natural number greater than or equal to 2, and optionally, n is 2, 3, 4, or 5;
   a first battery cell is provided in the first region; for any natural number k satisfying $2 \leq k \leq n$, a k-th battery cell is provided in a k-th region; the k-th battery cell and a (k-1)-th battery cell are arranged adjacent to each other; the internal space of the battery pack box comprises one or more first regions and/or k-th regions;
   a positive electrode of each k-th battery cell comprises a positive electrode active substance, the positive electrode active substance comprising the following substances:

   lithium iron phosphate and/or lithium nickel cobalt manganate having a first discharge voltage plateau, and one or more types of supplementary active substances having a second discharge voltage plateau, a molecular formula of the supplementary active substance being $A_xM_y(PO_4)_z$, wherein
   A is one or more selected from Li, Na, K, and Ca,
   M is one or more selected from V, Ti, and Mn,
   x, y, and z are each independently selected from integers from 1 to 6, and
   values of x, y, and z make the whole compound electrically neutral; and
   in the first battery cell to the n-th battery cell, in any case where a sum of a discharge capacity corresponding to the first discharge voltage plateau and a discharge capacity corresponding to the second discharge voltage plateau is 100%, a discharge capacity proportion corresponding to the second discharge voltage plateau of the k-th battery cell is greater than a discharge capacity proportion corresponding to the second discharge voltage plateau of the (k-1)-th battery cell.

2. The battery pack according to claim 1, **characterized in that** based on the determined temperature distribution in the entire internal space of the battery pack box during use under low temperature, for the first region or the k-th region, a difference between a maximum temperature and a minimum temperature in a same region is greater than or equal to 3°C, optionally, less than or equal to 10°C; and optionally, a maximum temperature in the k-th region is less than or equal to a minimum temperature in the (k-1)-th region.

3. The battery pack according to claim 2, **characterized in that**

in the entire internal space of the battery pack box, based on the determined temperature distribution in the internal space of the battery pack box during use under low temperature, a maximum temperature is $T_H$, a minimum temperature is $T_L$, and $T_H - T_L = T_M$;
when $T_M \geq 6°C$, optionally when $T_M \geq 7°C$, $n \geq 2$,
a maximum temperature in the first region is $T_H$, and a minimum temperature $T_1 = T_H - (T_M/n)$; and
when $k < n$,
a maximum temperature in the k-th region is $T_{k-1}$, a minimum temperature $T_K = T_H - k(T_M/n)$,
a maximum temperature in the n-th region is $T_{n-1}$, and a minimum temperature

$$T_n = T_L;$$

wherein

$$3°C \leq T_M/n \leq 10°C.$$

4. The battery pack according to any one of claims 1 to 3, **characterized in that**
in the positive electrode of each k-th battery cell, a mass percentage of the supplementary active substance is 3% to 15% based on a total mass of the positive electrode active substance.

5. The battery pack according to any one of claims 1 to 4, **characterized in that**

the positive electrode of each first battery cell comprises no supplementary active substance, or
the positive electrode of each first battery cell comprises the supplementary active substance, optionally, a second voltage plateau of the supplementary active substance in the first battery cell is greater than or equal to an overall discharge cut-off voltage of the first battery cell.

6. The battery pack according to any one of claims 1 to 5, **characterized in that**
under a condition that the respective positive electrodes of the first battery cell to the n-th battery cell comprise the same positive electrode active substance, a percentage of the supplementary active substance in the positive electrode of the (k-1)-th battery cell is less than or equal to a percentage of the supplementary active substance in the positive electrode of the k-th battery cell.

7. The battery pack according to any one of claims 1 to 6, **characterized in that**
the internal space of the battery pack box comprises the first region, the second region, and the third region; the first battery cell is provided in the first region; a second battery cell is provided in the second region; and a third battery cell is provided in the third region.

8. The battery pack according to any one of claims 1 to 7, **characterized in that**
the positive electrode of each first battery cell comprises no supplementary active substance or comprises a same type of supplementary active substance as the second battery cell and the third battery cell.

9. The battery pack according to any one of claims 1 to 8, **characterized in that**

in the positive electrode of each first battery cell, a mass percentage of the supplementary active substance is 0% to 3% based on a total mass of the active substance of the positive electrode;
in the positive electrode of each second battery cell, a mass percentage of the supplementary active substance is 3% to 7% based on a total mass of the active substance of the positive electrode; and
in the positive electrode of each third battery cell, a mass percentage of the supplementary active substance is 7% to 15% based on a total mass of the active substance of the positive electrode.

10. The battery pack according to any one of claims 1 to 9, **characterized in that**
under a temperature below 10°C, 1.6 V $\leq$ discharge cut-off voltage of the k-th battery cell $\leq$ discharge cut-off voltage of the (k-1)-th battery cell ≤ 2.1 V.

11. The battery pack according to any one of claims 1 to 10, **characterized in that**
an overall discharge cut-off voltage V1 of the first battery cell is 2.0-2.1 V, an overall discharge cut-off voltage V2 of the second battery cell is 1.7-2.0 V, an overall discharge cut-off voltage V3 of the third battery cell is 1.6-1.9 V, and V1 > V2 > V3.

12. The battery pack according to any one of claims 1 to 10, **characterized in that**
a discharge capacity of a single cell of each k-th battery cell is less than a discharge capacity of a single cell of each (k-1)-th battery cell.

13. The battery pack according to any one of claims 1 to 12, **characterized in that**
the supplementary active substance is one or more selected from $Li_3V_2(PO_4)_3$, $Na_3V_2(PO_4)_3$, $K_3V_2(PO_4)_3$, $Li_3V(PO_4)_2$, $Na_3V(PO_4)_2$, $K_3V(PO_4)_2$, $LiMnPO_4$, $NaMnPO_4$, $KMnPO_4$, $Li_2VMn_2(PO_4)_3$, $Na_2VMn_2(PO_4)_3$, $K_2VMn_2(PO_4)_3$, $LiVMn(PO_4)_2$, $NaVMn(PO_4)_2$, $KVMn(PO_4)_2$, $CaV_4(PO_4)_6$, $LiTi_2(PO_4)_3$, $NaTi_2(PO_4)_3$, $KTi_2(PO_4)_3$, $CaTi_4(PO_4)_6$, $Li_2VTi(PO_4)_3$, $Na_2VTi(PO_4)_3$, $K_2VTi(PO_4)_3$, $CaVTi(PO_4)_3$, $Li_3MnTi(PO_4)_3$, $Na_3MnTi(PO_4)_3$, and $K_3MnTi(PO_4)_3$.

14. The battery pack according to any one of claims 1 to 13, **characterized in that**
a positive electrode active substance of the first battery cell has a gram capacity of 140-198 mAh/g, a positive electrode active substance of the second battery cell has a gram capacity of 137-192 mAh/g, and a positive electrode active substance of the third battery cell has a gram capacity of 134-186 mAh/g.

15. A method for arranging battery pack, wherein the battery pack comprises a battery pack box and a battery cell accommodated in the battery pack box; and the method comprises:

step (1): determining temperature distribution in an entire internal space of the battery pack box during use under low temperature by using a simulation method;
step (2): based on the temperature distribution determined in step (1), dividing the internal space of the battery pack box into n regions according to a descending order of temperature, wherein n is a natural number greater than or equal to 2, and optionally, n is 2, 3, 4, or 5; and
step (3): providing a first battery cell in the first region; for any natural number k satisfying 2 ≤ k ≤ n, providing a k-th battery cell in a k-th region; and arranging the k-th battery cell and a (k-1)-th battery cell adjacent to each other;
wherein the internal space of the battery pack box comprises one or more first regions and/or k-th regions;
wherein a positive electrode of each k-th battery cell comprises a positive electrode active substance, the positive electrode active substance comprising the following substances:

lithium iron phosphate and/or lithium nickel cobalt manganate having a first discharge voltage plateau, and one or more types of supplementary active substances having a second discharge voltage plateau, a molecular formula of the supplementary active substance being $A_xM_y(PO_4)_z$, wherein
A is one or more selected from Li, Na, K, and Ca,
M is one or more selected from V, Ti, and Mn,
x, y, and z are each independently selected from integers from 1 to 6, and
values of x, y, and z make the whole compound electrically neutral; and
in the first battery cell to the n-th battery cell, in any case where a sum of a discharge capacity corresponding to the first discharge voltage plateau and a discharge capacity corresponding to the second discharge voltage plateau is 100%, a discharge capacity proportion corresponding to the second discharge voltage plateau of the k-th battery cell is greater than a discharge capacity proportion corresponding to the second discharge voltage plateau of the (k-1)-th battery cell.

16. An electric apparatus, **characterized by** comprising the battery pack according to any one of claims 1 to 14.

FIG. 1

FIG. 2

FIG. 3

FIG. 4

FIG. 5

FIG. 6

## INTERNATIONAL SEARCH REPORT

| International application No. |
|---|
| **PCT/CN2022/106429** |

**A.    CLASSIFICATION OF SUBJECT MATTER**

H01M10/0525(2010.01)i;H01M4/36(2006.01)i;H01M10/617(2014.01)i

According to International Patent Classification (IPC) or to both national classification and IPC

**B.    FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池包, 电池组, 电池模块, 电池模组, 不同, 区域, 位置, 温度, 低温, 分布, 成分, 中心, 中部, 电压平台, 活性材料, 活性物质, 磷酸锰锂, 磷酸钒锂, "battery pack", "battery module", different, area, region, temperature, low, distribute, composition, centre, center, central, "voltage plateau", "active material", LiMnPO4, Li3V2(PO4)3

**C.    DOCUMENTS CONSIDERED TO BE RELEVANT**

| Category* | Citation of document, with indication, where appropriate, of the relevant passages | Relevant to claim No. |
|---|---|---|
| Y | CN 112599891 A (WEILAI AUTOMOBILE TECHNOLOGY (ANHUI) CO., LTD.) 02 April 2021 (2021-04-02)<br>description, paragraphs 0005-0056, and figures 1-2 | 1-16 |
| Y | CN 111446488 A (NINGDE CONTEMPORARY AMPEREX TECHNOLOGY CO., LTD.) 24 July 2020 (2020-07-24)<br>description, paragraphs [0005]-[0052] | 1-16 |
| Y | CN 107293727 A (GUANGZHOU WINTONIC BATTERY & MAGNET CO., LTD.) 24 October 2017 (2017-10-24)<br>description, paragraphs 0004-0022 | 1-16 |
| A | CN 108550845 A (HUAZHONG UNIVERSITY OF SCIENCE AND TECHNOLOGY) 18 September 2018 (2018-09-18)<br>entire document | 1-16 |
| A | CN 112751074 A (BEIJING XIAOMI MOBILE SOFTWARE CO., LTD.) 04 May 2021 (2021-05-04)<br>entire document | 1-16 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 March 2023** | **04 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/106429** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2015194664 A1 (TOYOTA JIDOSHA KABUSHIKI KAISHA) 09 July 2015 (2015-07-09) <br>     entire document | 1-16 |

**INTERNATIONAL SEARCH REPORT**
Information on patent family members

| International application No. |
| --- |
| **PCT/CN2022/106429** |

| Patent document cited in search report | | | Publication date (day/month/year) | Patent family member(s) | | | Publication date (day/month/year) |
| --- | --- | --- | --- | --- | --- | --- | --- |
| CN | 112599891 | A | 02 April 2021 | EP | 4026714 | A1 | 13 July 2022 |
| | | | | US | 2022223944 | A1 | 14 July 2022 |
| CN | 111446488 | A | 24 July 2020 | | None | | |
| CN | 107293727 | A | 24 October 2017 | | None | | |
| CN | 108550845 | A | 18 September 2018 | | None | | |
| CN | 112751074 | A | 04 May 2021 | | None | | |
| US | 2015194664 | A1 | 09 July 2015 | US | 10153481 | B2 | 11 December 2018 |
| | | | | KR | 20150083025 | A | 16 July 2015 |
| | | | | JP | 2015130298 | A | 16 July 2015 |
| | | | | JP | 5991551 | B2 | 14 September 2016 |
| | | | | DE | 102015100119 | A1 | 09 July 2015 |
| | | | | DE | 102015100119 | B4 | 02 November 2017 |
| | | | | CN | 104766993 | A | 08 July 2015 |

Form PCT/ISA/210 (patent family annex) (July 2022)